# EUROPEAN PATENT APPLICATION

(11) **EP 3 352 458 A1**
(43) Date of publication of application: **25.07.2018**
(21) Application number: 17154517.1
(22) Date of filing: 03.02.2017
(51) Int. Cl.: H04N 13/02, H04N 5/235, H04N 5/232

(54) **MULTI-CAMERA STEREOSCOPIC DYNAMIC IMAGING SYSTEMS AND METHODS OF CAPTURING STEREOSCOPIC DYNAMIC IMAGES**

(30) Priority: 18.01.2017 US 201715409181
(71) Applicant: Conway, Jerry L., Hoover, Al 35244 (US); Jiang, Ming, Alpharetta, GA 30022 (US)
(72) Inventor: Conway, Jerry L., Hoover, Al 35244 (US); Jiang, Ming, Alpharetta, GA 30022 (US)
(74) Representative: Weickmann & Weickmann PartmbB

(57) **Abstract**

Aspects of present disclosure relates to multi-camera stereoscopic dynamic imaging systems and methods of capturing stereoscopic dynamic images. In certain embodiments, the multi-camera stereoscopic dynamic imaging system includes: a first camera assembly, a second camera assembly optically coupled to the first camera assembly via an optical medium, a stereoscopic dynamic imaging system, and a stereoscopic dynamic image display device. The first camera assembly capture a first set of focused images and a third set of focused images of multiple objects within a visual scene and the second camera assembly captures image signal of a second set of focused images and a fourth set of focused images of the multiple objects. The image signals are transmitted to and processed by a stereoscopic dynamic imaging system to form the stereoscopic dynamic image. The stereoscopic dynamic image may be dynamically and interactively displayed by the stereoscopic dynamic image display device.

## Description

### FIELD

The present disclosure generally relates to stereoscopic dynamic image, and more particularly to multi-camera stereoscopic dynamic imaging systems and methods of capturing stereoscopic dynamic images.

### BACKGROUND

Aperture and focusing distance are the two primary factors that determine how sharp a still picture will be on a camera's sensor. Larger apertures (smaller F-stop numbers) and closer focusing distances produce a shallower depth of field. For example, in portrait photography, a well taken picture may focus on the person so that the portrait of the person will appear very sharp and clear while other objects such as flowers, buildings, trees, etc. in front of and beyond the person appear soft and out of focus. In this case, the photographer takes advantage of the large aperture to emphasize the person, and deemphasize everything else. However, when taking a picture of a large gathering such as a concert, or a meeting where there are many people at different distances, the photographer is presented with a dilemma: where to place the focus of the picture. Although a smaller aperture can increase the depth of the field, it is impossible to take a picture with everything in focus. The photographer has to decide where to focus and then take the picture. Once the picture is taken, the depth of field in the picture is permanent and unalterable and the sharpness of anything outside the selected depth of field is forever lost. Therefore, all other elements in the photograph outside this depth of field will not be recorded in detail making it impossible for any other viewer of the photograph to see those afore mentioned portions of the picture in focus.

Therefore, heretofore unaddressed needs still exist in the art to address the aforementioned deficiencies and inadequacies.

### SUMMARY

In one aspect, the present disclosure relates to a dual camera stereoscopic dynamic imaging system. In certain embodiments, the dual camera stereoscopic dynamic imaging system includes: a first camera assembly, a second camera assembly optically coupled to the first camera assembly via an optical medium, and a stereoscopic dynamic imaging system. The first camera assembly has a first auto-focus lens to capture image signal of a first set of focused images of multiple objects within a visual scene through a first optical path, and image signal of a third set of focused images of the multiple objects within the visual scene through the third optical path through a first sensor and transmit the captured image signal to the stereoscopic dynamic imaging system through a first communication channel. The second camera assembly has a second auto-focus lens to capture image signal of a second set of focused images of the multiple objects within the visual scene through a second optical path, and image signal of a fourth set of focused images of the multiple objects within the visual scene through a fourth optical path through a second sensor and transmit the captured image signal to the stereoscopic dynamic imaging system through a second communication channel.

In certain embodiments, the multiple objects includes one or more groups of objects, and each group includes one or more objects within a predetermined distance range. Each of the first set of focused images and the third set of focused images is focused at each of the one or more groups of one or more objects through the first auto-focus lens. Each of the second set of focused images and the fourth set of focused images is focused at each of the one or more groups of one or more objects through the second auto-focus lens.

In certain embodiments, the stereoscopic dynamic imaging system receives, processes and stores the image signal of the first set of focused images and the third set of focused images captured by the first camera assembly, and the image signal of the second set of focused images and the fourth set of focused images captured by the second camera assembly.

The present disclosure also relates to a stereoscopic dynamic video recording system having the dual camera stereoscopic dynamic imaging system.

In another aspect, the present disclosure relates to a method of capturing a stereoscopic dynamic image using a dual camera stereoscopic dynamic imaging system. In certain embodiments, the method includes: evaluating, by a first auto-focus lens of a first camera assembly and a second auto-focus lens of a second camera assembly, respectively, focusing distances to multiple objects within a visual scene, and capturing image signal of a first set of focused images of the multiple objects through a first optical path and a third set of focused images of the multiple objects through a third optical path by a first sensor of the first camera assembly, and image signal of a second set of focused images of the plurality of objects through a second optical path and a fourth set of focused images of the plurality of objects through a fourth optical path by a second sensor of the second camera assembly, respectively. The multiple objects may be divided into one or more groups of objects, and each group includes one or more objects within a predetermined distance range when each of the first set of focused images and the third set of focused images is focused at a corresponding group of one or more objects through the first auto-focus lens, and each of the second set of focused images and the fourth set of focused images is focused at the corresponding group of one or more objects through the second auto-focus lens.

In certain embodiments, the method also includes: receiving, at an image signal mixer 141 of a stereoscopic dynamic imaging system, the image signal of the first set of focused images and the third set of focused images from the first sensor of the first camera assembly through a first communication channel, and the image signal of the second set of focused images and the fourth set of focused images from the second sensor of the second camera assembly through a second communication channel, processing, by an image processing device of the stereoscopic dynamic imaging system, the image signal of the first set of focused images and the third set of focused images from the first communication channel, and the image signal of the second set of focused images and the fourth set of focused images from the second communication channel received by the image signal mixer to form the stereoscopic dynamic image, and storing, by an image storage device, the stereoscopic dynamic image processed by the image processing device. The stereoscopic dynamic image captured includes: the first set of focused images, the second set of focused images, the third set of focused images, and the fourth set of focused images, and each of the first set of focused images, the second set of focused images, the third set of focused images, and the fourth set of focused images includes a same number of focused images, and each focused image is focused on a group of one or more objects within the predetermined distance range.

In certain embodiments, the method may also include: displaying, by a stereoscopic dynamic image display device, the stereoscopic dynamic image. In one embodiment, the stereoscopic dynamic image display device may include a gaze detection device which measures eye positions and eye movement of a viewer. When the viewer moves his/her eyes towards a group of one or more objects as shown on the stereoscopic dynamic image display device, the gaze detection device detects the viewer's eyes are aimed at the group of one or more objects, focused images from each of the first set of focused images, the second set of focused images, the third set of the focused images, and the fourth set of focused images of the stereoscopic dynamic image corresponding to the group of one or more objects are displayed dynamically and interactively on the stereoscopic dynamic image display device. In another embodiment, the stereoscopic dynamic image display device may include a touch screen input device or a mouse pointing device. When the viewer touches a group of one or more objects, or uses the mouse to click the group of one or more objects on the screen as shown on the stereoscopic dynamic image display device, focused images from each of the first set of focused images, the second set of focused images, the third set of the focused images, and the fourth set of focused images of the stereoscopic dynamic image corresponding to the group of one or more objects are displayed dynamically and interactively on the stereoscopic dynamic image display device.

These and other aspects of the present disclosure will become apparent from the following description of the preferred embodiment taken in conjunction with the following drawings and their captions, although variations and modifications therein may be affected without departing from the spirit and scope of the novel concepts of the disclosure.

### BRIEF DESCRIPTION OF THE DRAWINGS

The accompanying drawings illustrate one or more embodiments of the disclosure and, together with the written description, serve to explain the principles of the disclosure. Wherever possible, the same reference numbers are used throughout the drawings to refer to the same or like elements of an embodiment, and wherein:
FIG. 1 schematically shows a block diagram of a multi-camera stereoscopic dynamic imaging system according to certain embodiments of the present disclosure;
FIG. 2 illustrates an exemplary stereoscopic dynamic image capturing of an exemplary visual scene using the multi-camera stereoscopic dynamic imaging system according to certain embodiments of the present disclosure;
FIG. 3 illustrates an exemplary quadruple-camera stereoscopic dynamic imaging system having according to certain embodiments of the present disclosure;
FIG. 4 illustrates the visual scene having multiple objects according to certain embodiments of the present disclosure;
FIG. 5A illustrates a first focused image of a first group of objects located in a near focal distance, FIG. 5B illustrates a second focused image of a second group of objects located in a medium focal distance, FIG. 5C illustrates a third focused image of a third group of objects located in a far focal distance and a background of the visual scene according to one embodiment of the present disclosure;

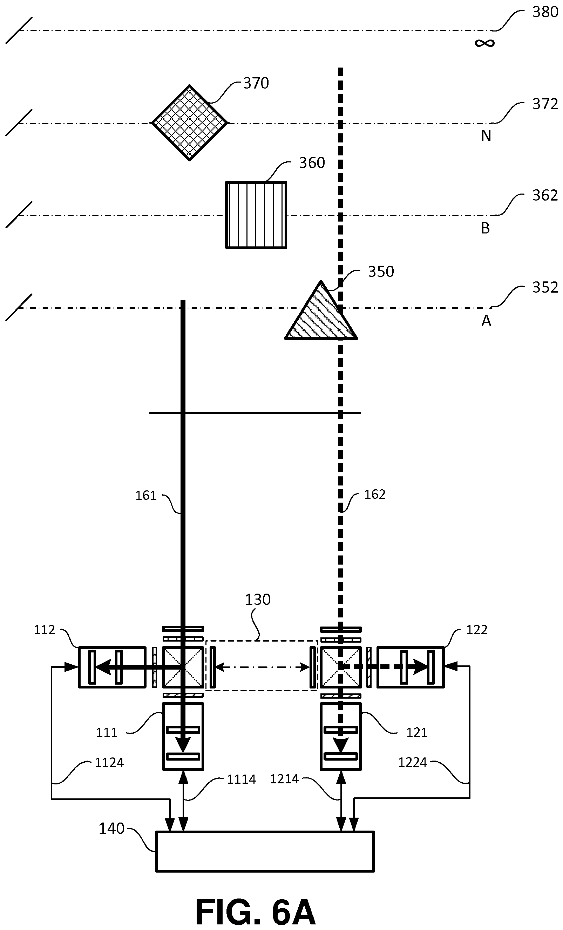

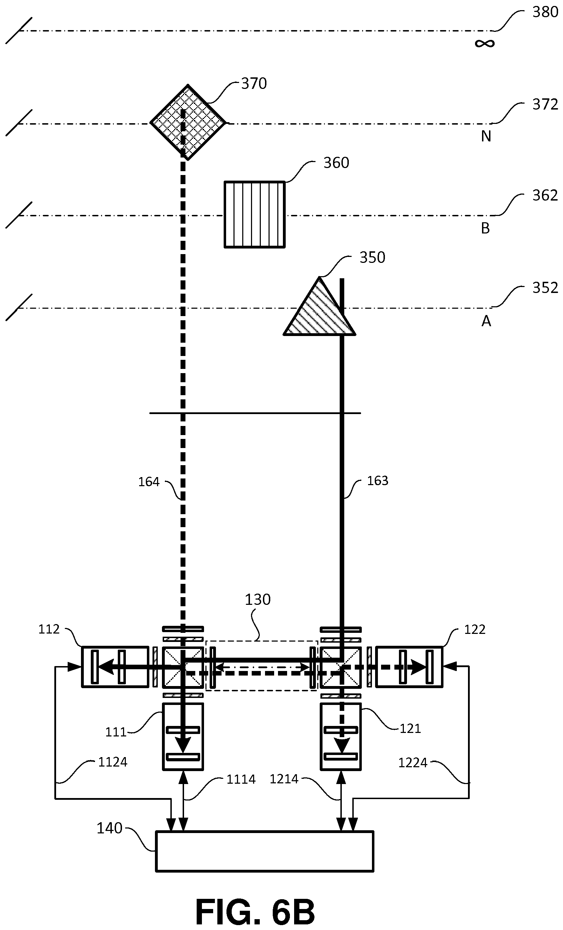

FIG. 6A illustrates a first camera assembly capturing a first set of focused images of multiple groups of objects and a second camera assembly capturing a second set of focused images of the multiple groups of objects during a first image capturing cycle, and FIG. 6B illustrates the first camera assembly capturing a third set of focused images of the multiple groups of objects and the second camera assembly capturing a fourth set of focused images of the multiple groups of objects during a subsequent second image capture cycle; and
FIG. 7 is a flow chart illustrating a method of capturing stereoscopic dynamic images using the multi-camera stereoscopic dynamic imaging system according to certain embodiments of the present disclosure.

### DETAILED DESCRIPTION

The present disclosure is more particularly described in the following examples that are intended as illustrative only since numerous modifications and variations therein will be apparent to those skilled in the art. Various embodiments of the disclosure are now described in detail. Referring to the drawings, like numbers, if any, indicate like components throughout the views. As used in the description herein and throughout the claims that follow, the meaning of "a", "an", and "the" includes plural reference unless the context clearly dictates otherwise. Also, as used in the description herein and throughout the claims that follow, the meaning of "in" includes "in" and "on" unless the context clearly dictates otherwise. Moreover, titles or subtitles may be used in the specification for the convenience of a reader, which shall have no influence on the scope of the present disclosure. Additionally, some terms used in this specification are more specifically defined below.

The terms used in this specification generally have their ordinary meanings in the art, within the context of the disclosure, and in the specific context where each term is used. Certain terms that are used to describe the disclosure are discussed below, or elsewhere in the specification, to provide additional guidance to the practitioner regarding the description of the disclosure. For convenience, certain terms may be highlighted, for example using italics and/or quotation marks. The use of highlighting has no influence on the scope and meaning of a term; the scope and meaning of a term is the same, in the same context, whether or not it is highlighted. It will be appreciated that same thing can be said in more than one way. Consequently, alternative language and synonyms may be used for any one or more of the terms discussed herein, nor is any special significance to be placed upon whether or not a term is elaborated or discussed herein. Synonyms for certain terms are provided. A recital of one or more synonyms does not exclude the use of other synonyms. The use of examples anywhere in this specification including examples of any terms discussed herein is illustrative only, and in no way limits the scope and meaning of the disclosure or of any exemplified term. Likewise, the disclosure is not limited to various embodiments given in this specification.

Unless otherwise defined, all technical and scientific terms used herein have the same meaning as commonly understood by one of ordinary skill in the art to which this disclosure pertains. In the case of conflict, the present document, including definitions will control.

As used herein, "around", "about" or "approximately" shall generally mean within 20 percent, preferably within 10 percent, and more preferably within 5 percent of a
given value or range. Numerical quantities given herein are approximate, meaning that the term "around", "about" or "approximately" can be inferred if not expressly stated.

As used herein, "plurality" means two or more.

As used herein, the terms "comprising," "including," "carrying," "having," "containing," "involving," and the like are to be understood to be open-ended, i.e., to mean including but not limited to.

As used herein, the phrase at least one of A, B, and C should be construed to mean a logical (A or B or C), using a non-exclusive logical OR. It should be understood that one or more steps within a method may be executed in different order (or concurrently) without altering the principles of the present disclosure.

As used herein, the term module/device may refer to, be part of, or include an Application Specific Integrated Circuit (ASIC); an electronic circuit; a combinational logic circuit; a field programmable gate array (FPGA); a processor (shared, dedicated, or group) that executes code; other suitable hardware components that provide the described functionality; or a combination of some or all of the above, such as in a system-on-chip. The term module/device may include memory (shared, dedicated, or group) that stores code executed by the processor.

The term code, as used above, may include software, firmware, and/or microcode, and may refer to programs, routines, functions, classes, and/or objects. The term shared, as used above, means that some or all code from multiple modules may be executed using a single (shared) processor. In addition, some or all code from multiple modules may be stored by a single (shared) memory. The term group, as used above, means that some or all code from a single module may be executed using a group of processors. In addition, some or all code from a single module may be stored using a group of memories.

The apparatuses and methods described herein may be implemented by one or more computer programs executed by one or more processors. The computer programs include processor-executable instructions that are stored on a non-transitory tangible computer readable medium. The computer programs may also include stored data. Non-limiting examples of the non-transitory tangible computer readable medium are nonvolatile memory, magnetic storage, and optical storage.

The present disclosure will now be described more fully hereinafter with reference to the accompanying drawings, in which embodiments of the disclosure are shown. This disclosure may, however, be embodied in many different forms and should not be construed as limited to the embodiments set forth herein; rather, these embodiments are provided so that this disclosure will be thorough and complete, and will fully convey the scope of the disclosure to those skilled in the art. Like numbers refer to like elements throughout.

As described in the background, when a portrait is taken, the portrait may focus on a person such that the person in the portrait may appear very sharp and clear in the picture, while other objects such as buildings or trees in the background away from the person may appear soft and out of focus. However, when taking a picture or video of a large gathering such as a concert, or a meeting where there are many people, the photographer is presented with a dilemma: where to place the focus of the picture. Although a smaller aperture can increase the depth of the field, but it is impossible to take a picture with everything in focus. The photographer has to decide where to focus and then take the photo. Once the picture is taken, the depth of field in the picture is permanent and unalterable and the sharpness of anything outside the selected depth of field is forever lost. Therefore, all other elements in the photograph outside this depth of field will not be recorded in detail making it impossible for any other viewer of the photograph to see those afore mentioned portions of the picture in focus.

The present disclosure relates to a multi-camera stereoscopic dynamic imaging system 100 that takes a stereoscopic dynamic image of a visual scene. The stereoscopic dynamic image includes not only one picture where the photographer chooses to focus, but also multiple focused images of the visual scene including a first set of focused images, a second set of focused images, a third set of the focused images, and a fourth set of focused images of a stereoscopic dynamic image, and each focused image of each set of focused images is focused on different groups of one or more objects at different focusing distances. Additional information of the visual scene is preserved and may be displayed. A stereoscopic dynamic image display device may be used to display the stereoscopic dynamic image. In one embodiment, the stereoscopic dynamic image display device may include a gaze detection device which measures eye positions and eye movement of a viewer. When the viewer moves his/her eyes towards a group of one or more objects as shown on the stereoscopic dynamic image display device, the gaze detection device detects the viewer's eyes are aimed at the group of one or more objects, focused images from each of the first set of focused images, the second set of focused images, the third set of the focused images, and the fourth set of focused images of the stereoscopic dynamic image corresponding to the group of one or more objects are displayed dynamically and interactively on the stereoscopic dynamic image display device. In another embodiment, the stereoscopic dynamic image display device may include a touch screen input device or a mouse pointing device. When the viewer touches a group of one or more objects, or uses the mouse to click the group of one or more objects on the screen as shown on the stereoscopic dynamic image display device, focused images from each of the first set of focused images, the second set of focused images, the third set of the focused images, and the fourth set of focused images of the stereoscopic dynamic image corresponding to the group of one or more objects are displayed dynamically and interactively on the stereoscopic dynamic image display device.

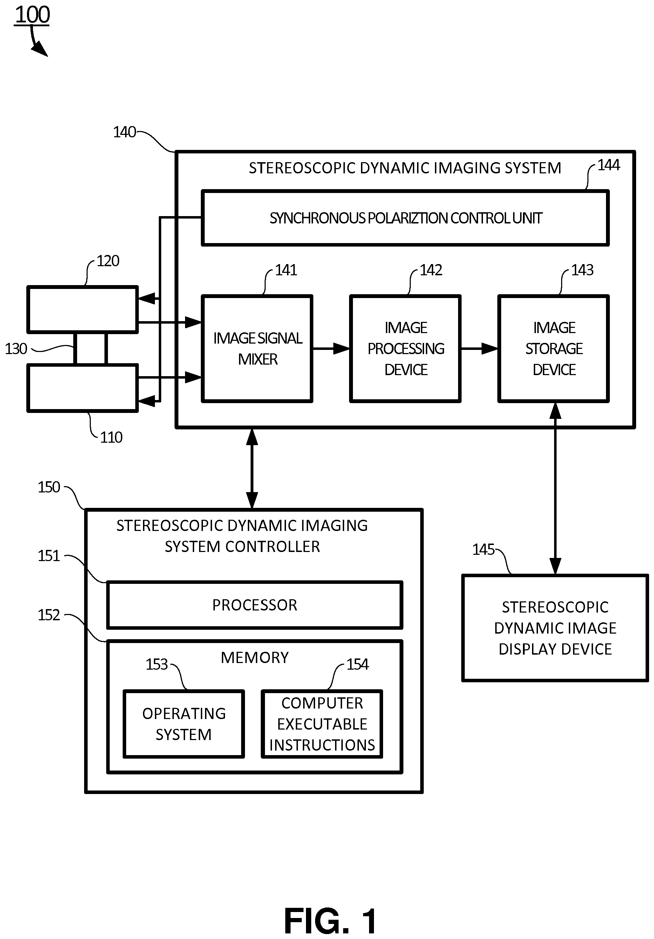

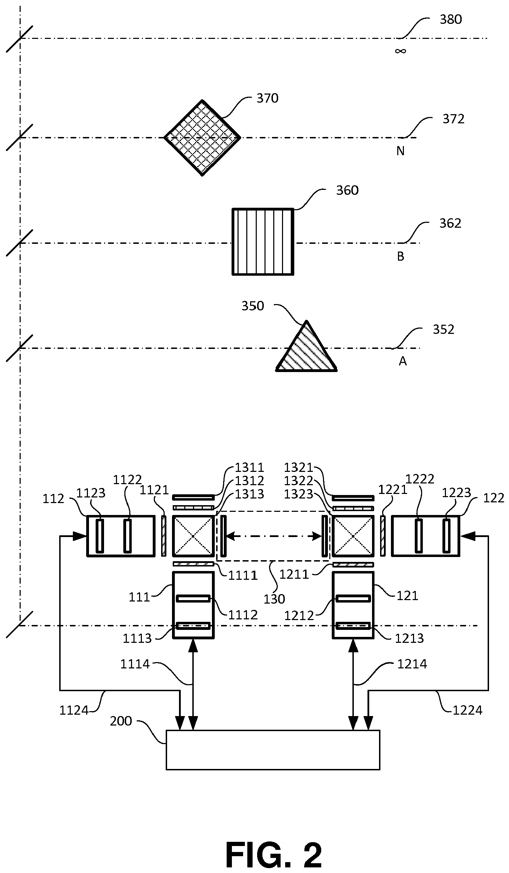

In one aspect, the present disclosure relates to a multi-camera stereoscopic dynamic imaging system 100 as shown in FIG. 1 and FIG. 2. In certain embodiments, the multi-camera stereoscopic dynamic imaging system 100 includes: a first camera assembly 110, a second camera assembly 120 optically coupled to the first camera assembly 110 via an optical medium 130, and a stereoscopic dynamic imaging system 140. The first camera assembly 110 has a first set of cameras to capture image signal of a first set of focused images of multiple objects within a visual scene through a first optical path 161, and image signal of a third set of focused images of the multiple objects within the visual scene through a third optical path 163, and transmit the captured image signals to a stereoscopic dynamic imaging system 140. The second camera assembly 120 has a second set of cameras to capture image signal of a second set of focused images of the multiple objects within the visual scene through a second optical path 162, and image signal of a fourth set of focused images of the multiple objects within the visual scene through a fourth optical path 164, and transmit the captured image signals to the stereoscopic dynamic imaging system 140.

In certain embodiments, the multiple objects include one or more groups of objects, and each group has one or more objects within a predetermined distance range. Each of the first set of focused images, the second set of focused images, the third set of focused images, and the fourth set of focused images is focused on a group of one or more objects.

In certain embodiments, the stereoscopic dynamic imaging system 140 receives, and process the image signal of the first set of focused images and the third set of focused images captured by the first camera assembly 110, and the image signal of the second set of focused images and the fourth set of focused images captured by the second camera assembly 120 to form a stereoscopic dynamic image and to store the stereoscopic dynamic image.

In certain embodiments, the stereoscopic dynamic imaging system 140 includes a stereoscopic dynamic imaging system controller 150 for controlling the stereoscopic dynamic imaging system 140. The stereoscopic dynamic imaging system controller 150 has one or more processors 151. In one embodiment, the processors 151 may include a reduced instruction set computer (RISC) microprocessor. The processors 151 are coupled to a system memory 152 and various other components via a system bus (not shown in FIG. 1). In one embodiment, the system memory 152 may include a Read Only Memory (ROM) coupled to the processors 151 and may include a basic input/output system (BIOS), which controls certain basic functions of the stereoscopic dynamic imaging system controller 150.

In exemplary embodiments, the processors 151 may include a graphics processing unit (not shown in FIG. 1). The graphics processing unit is a specialized electronic circuit designed to manipulate and alter memory to accelerate the creation of images in a frame buffer intended for output to a display. In general, the graphics processing unit is very efficient at manipulating computer graphics and image processing, and has a highly parallel structure that makes it more effective than general-purpose CPUs for algorithms where processing of large blocks of data is done in parallel.

In certain embodiments, as configured in FIG. 1, the stereoscopic dynamic imaging system controller 150 includes processing capability in the form of the processors 151, storage capability including the system memory 152 and an image storage device 143, image input from the first camera assembly 110 and the second camera assembly 120 and output capability to a stereoscopic dynamic image display device 145. In one embodiment, a portion of the system memory 152 may store one or more operating systems as well as computer executable instructions 154 including a set of application programs to coordinate the functions of the various components of the stereoscopic dynamic imaging system controller 150 as shown in FIG. 1. The set of application programs, inclusive of certain utility programs, may also provide a graphical user interface to the user. A web browser is an application program and runs on the operating system. The operating system is operable to multitask, i.e., execute computing tasks in multiple threads, and thus may include, but not limited to any of the following: MICROSOFT CORPORATION's "WINDOWS XP" or "WINDOWS NT", "WINDOWS Vista,", "WINDOWS 7," "WINDOWS 8," and "WINDOWS 10" operating systems, IBM's OS/2 WARP, APPLE's MACINTOSH OSX operating system, LINUX, UNIX, etc. The web browser may include one or more of: SAFARI, CHROME, FIREFOX, and INTERNET EXPLORER.

In certain embodiments, each of the first set of cameras includes: a first active polarizing filter 1111, an auto-focus lens 1112, a first sensor 1113, and a first communication channel 1114. The first active polarizing filter 1111 is used to switch between the first optical path 161 and the third optical path 163 controlled by a synchronous polarization control unit 144 of the stereoscopic dynamic imaging system 140. The auto-focus lens 1112 is used to focus on a group of one or more objects. The first sensor 1113 captures image signal of a focused image of the group of one or more objects focused by the auto-focus lens 1112. The first communication channel 1114 transmits the captured focused image of the group of one or more objects to the stereoscopic dynamic imaging system 140. Each of the second set of cameras includes: a second active polarizing filter 1211, a second auto-focus lens 1212, a second sensor 1213, and a second communication channel 1214. The second active polarizing filter 1211 is used to switch between the second optical path 162 and the fourth optical path 164 controlled by the synchronous polarization control unit 144 of the stereoscopic dynamic imaging system 140. The second auto-focus lens 1212 focuses on a group of one or more objects. The second sensor 1213 captures image signal of a focused image of the group of one or more objects focused by the second auto-focus lens 1212. The second communication channel 1214 transmits the captured focused image of the group of one or more objects to the stereoscopic dynamic imaging system 140.

In certain embodiments, the first optical path 161 includes a first external lens 1311, a first static polarizing filter 1312, a first beam splitter 1313 splitting the first optical path 161 into a first group of sub optical paths, each of the first group of sub optical paths is optically coupled to the first beam splitter 1313. Each of the first group of sub optical paths includes the first active polarizing filters 1111, the first auto-focus lens 1112, and the first sensor 1113, and each of the first group of sub optical paths focuses on one of the one or more groups of one or more objects within the visual scene. The second optical path 162 includes a second external lens 1321, a second static polarizing filter 1322, a second beam splitter 1323 splitting the second optical path 162 into a second group of sub optical paths, each of the second group of sub optical paths is optically coupled to the first beam splitter 1313. Each of the second group of sub optical paths includes the second active polarizing filters 1211, the second auto-focus lens 1212, and the second sensor 1113. Each of the second group of sub optical paths focuses on one of the one or more groups of one or more objects within the visual scene.

In certain embodiments, the third optical path 163 includes the second external lens 1321, the second static polarizing filter 1322, the second beam splitter 1323, an optical medium 130, and the first beam splitter 1313 splitting the third optical path 163 into a third group of sub optical paths, and each of the third group of sub optical paths is optically coupled to the first beam splitter 1313. , wherein each of the third group of sub optical paths includes the first active polarizing filters 1111, the first auto-focus lens 1112, and the first sensor 1113, and each of the third group of sub optical paths focuses on one of the one or more groups of one or more objects within the visual scene. The fourth optical path 164 includes the first external lens 1311, the first static polarizing filter 1312, the first beam splitter 1313, the optical medium 130, and the second beam splitter 1323 splitting the fourth optical path 164 into a fourth group of sub optical paths, each of the fourth group of sub optical paths is optically coupled to the second beam splitter 1323, wherein each of the fourth group of sub optical paths includes the second active polarizing filters 1211, the second auto-focus lens 1212, and the second sensor 1213, and each of the fourth group of sub optical paths focuses on one of the one or more groups of one or more objects within the visual scene.

In certain embodiments, a synchronous polarization control unit 144 of the stereoscopic dynamic imaging system 140 polarizes each of the first active polarizing filters 1111 in a same direction as the first static polarizing filter 1312 to open the first optical path 161 and the first group of sub optical paths, and polarizes each of the second active polarizing filters 1211 in a same direction as the second static polarizing filter 1322 to open the second optical path 162 and the second group of sub optical paths during a first image capture cycle. The synchronous polarization control unit 144 of the stereoscopic dynamic imaging system 140 polarizes each of the first active polarizing filters 1111 in a same direction as the second static polarizing filter 1322 to open the third optical path 163 and the third group of sub optical paths, and polarizes each of the second active polarizing filters 1211 in a same direction as the first static polarizing filter 1312 to open the fourth optical path 164 and the fourth group of sub optical paths during a subsequent second image capture cycle. The synchronous polarization control unit 144 of the stereoscopic dynamic imaging system 140 controls the first camera assembly 110 and the second camera assembly 120 such that the first optical path and the second optical path are open and the third optical path and the fourth optical path are closed during the first image capture cycle, and the third optical path and the fourth optical path are open and the first optical path and the second optical path are closed during the subsequent second image capture cycle.

In certain embodiments, each of the multiple cameras of the first camera assembly 110 captures each of the first set of focused images synchronously with each of the corresponding second set of focused images when each of the one or more groups of one or more objects is detected by the first camera assembly 110 and the second camera assembly 120 to be in focus respectively, and when the first optical path 161, the first group of sub optical paths, the second optical path 162, and the second group of sub optical paths are open, and captures each of the third set of focused images synchronously with each of the corresponding fourth set of focused images when each of the one or more groups of one or more objects is detected by the first camera assembly 110 and the second camera assembly 120 to be in focus respectively, and when the third optical path 163, the third group of sub optical paths, the fourth optical path 164, and the fourth group of sub optical paths are open.

In certain embodiments, during the first image capture cycle, each of the first sensors captures a focused image of the first set of focused images and related data when a group of one or more objects is detected to be in focus, and each of the second sensors captures a focused image of the second set of focused images and related data when a corresponding group of one or more objects is detected to be in focus. The focused image of the first set of focused images captured and the focused image of the second set of focused images captured and their related data are transmitted to the stereoscopic dynamic imaging system 140.

In certain embodiments, during the second image capture cycle, each of the first sensors 1113 captures a focused image of the third set of focused images and related data when a group of one or more objects is detected to be in focus, and each of the second sensors 1213 captures a focused image of the fourth set of focused images and related data when a corresponding group of one or more objects is detected to be in focus. The focused image of the third set of focused images captured and the focused image of the fourth set of focused images captured and their related data are transmitted to the stereoscopic dynamic imaging system 140.

In certain embodiments, the operations performed during the first image capture cycle and the subsequent second image capture cycle for each of the one or more groups of one or more objects are repeated until each of the first set of focused images, the second set of focused images, the third set of focused images, and the fourth set of focused images is captured.

In certain embodiments, the related data of the first set of focused images, the second set of focused images, the third set of focused images and the fourth set of focused images includes: a total number of images captured in each of the first set of focused images, the second set of focused images, the third set of focused images and the fourth set of focused images, a time when each of the first set of focused images, the second set of focused images, the third set of focused images and the fourth set of focused images is captured, one or more optical conditions when each of the first set of focused images, the second set of focused images, the third set of focused images and the fourth set of focused images is captured, GPS location coordinates where each of the first set of focused images, the second set of focused images, the third set of focused images and the fourth set of focused images is captured, data needed to determine focusing distances to each of the one or more groups of one or more objects within the visual scene for each of the first set of focused images, the second set of focused images, the third set of focused images and the fourth set of focused images is captured, and data needed to determine the boundaries of each of the one or more groups of one or more objects within the visual scene for each of the first set of focused images, the second set of focused images, the third set of focused images and the fourth set of focused images is captured.

In certain embodiments, the stereoscopic dynamic imaging system 140 includes: an image signal mixer 141, an image processing device 142, and an image storage device 143, the synchronous polarization control unit 144. The image signal mixer 141 receives the image signals of the first set of focused images and the third set of focused images from the first communication channels, and the image signals of the second set of focused images and the fourth set of focused images from the second communication channels. The image processing device 142 processes the image signals of the first set of focused images, the second set of focused images, the third set of focused images, and the fourth set of focused images received by the image signal mixer 141 and forms the stereoscopic dynamic image. The image storage device 143 stores the stereoscopic dynamic image processed by the image processing device 142.

In certain embodiments, the stereoscopic dynamic image captured by the multi-camera stereoscopic dynamic imaging system 100 includes: the first set of focused images, the second set of focused images, the third set of focused images, and the fourth set of focused images. Each of the first set of focused images, the second set of focused images, the third set of focused images, and the fourth set of focused images includes a same number of focused images, each focused image is focused on a group of one or more objects within the predetermined distance range.

In certain embodiments, the stereoscopic dynamic imaging system 140 may include a stereoscopic dynamic image display device 145 as shown in FIG. 1. The stereoscopic dynamic image display device 145 displays the stereoscopic dynamic image. The stereoscopic dynamic image includes a first set of focused images, a second set of focused images, a third set of the focused images, and a fourth set of focused images of a stereoscopic dynamic image, and each focused image is focused on objects at different focusing distances. In one embodiment, the stereoscopic dynamic image display device may include a gaze detection device which measures eye positions and eye movement of a viewer. When the viewer moves his/her eyes towards a group of one or more objects as shown on the stereoscopic dynamic image display device, the gaze detection device detects the viewer's eyes are aimed at the group of one or more objects, focused images from each of the first set of focused images, the second set of focused images, the third set of the focused images, and the fourth set of focused images of the stereoscopic dynamic image corresponding to the group of one or more objects are displayed dynamically and interactively on the stereoscopic dynamic image display device. In another embodiment, the stereoscopic dynamic image display device may include a touch screen input device or a mouse pointing device. When the viewer touches a group of one or more objects, or uses the mouse to click the group of one or more objects on the screen as shown on the stereoscopic dynamic image display device, focused images from each of the first set of focused images, the second set of focused images, the third set of the focused images, and the fourth set of focused images of the stereoscopic dynamic image corresponding to the group of one or more objects are displayed dynamically and interactively on the stereoscopic dynamic image display device.

In certain embodiments, the stereoscopic dynamic image display device 145 may include monitors, television sets, flat panel displays, touch screen displays, computer monitors, laptop computer screens, tablet display screens, digital picture frames, smartphone display screens, as well as any digital image display devices. The stereoscopic dynamic image display device 145 may include a gaze detection device to detect the viewer's eye movement, a touch screen or a mouse to receive one or more viewer's input.

In certain embodiments, when the stereoscopic dynamic image display device 145 does not include the additional equipment as discussed above, the stereoscopic dynamic image may be displayed with each of set of focused images overlaid, where each of the set of focused images having the redundant and out of focus portions removed from the set of focused images.

In certain embodiments, the first camera assembly 110 and the second camera assembly 120 automatically evaluate, focus and track on each of the one or more groups of one or more objects through each of the first auto-focus lenses 1112, and each of the second auto-focus lenses 1112. In one embodiment, the first camera assembly 110 and the second camera assembly 120 automatically evaluate, focus and track on each of the one or more groups of one or more objects through each of the first auto-focus lenses 1112, and each of the second auto-focus lenses 1112 over the first optical path 161, the second optical path 162, the third optical path 163 and the fourth optical path 164. In another embodiment, the first camera assembly 110 and the second camera assembly 120 automatically evaluate, focus and track on each of the one or more groups of one or more objects through a second lens system sharing the first optical path 161, the second optical path 162, the third optical path 163 and the fourth optical path 164. In yet another embodiment, the first camera assembly 110 and the second camera assembly 120 automatically evaluate, focus and track on each of the one or more groups of one or more objects through an ancillary optical path.

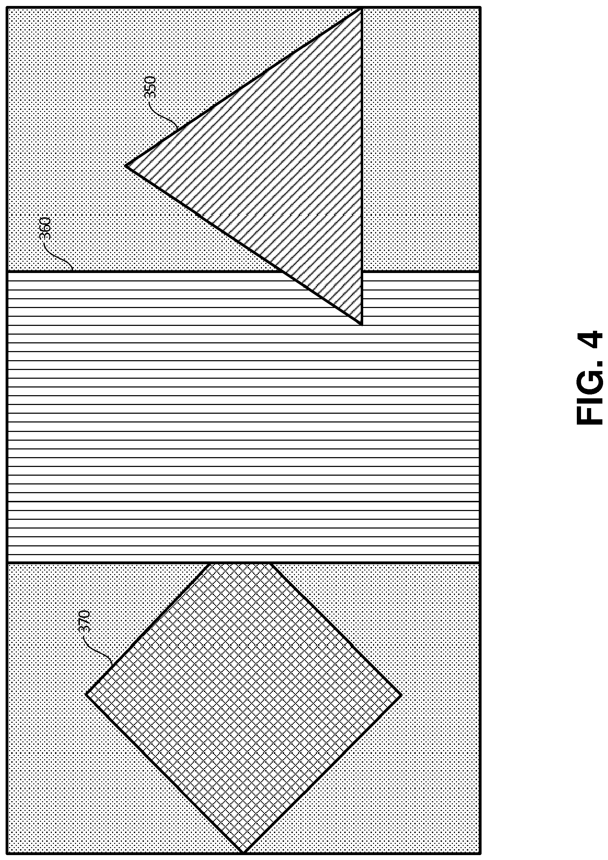

In one aspect, the present disclosure relates to a stereoscopic dynamic image of a visual scene as shown in FIG. 2. The visual scene may include many groups of objects, and each group may include one or more objects. In an exemplary embodiment, there are three groups of objects. For the purpose of simplicity, each group contains one object. A first group includes a triangular shape 350 in diagonal line pattern. A second group includes a rectangular shape 360 in vertical line pattern. A third group includes a diamond shape 370 in a diagonal grid pattern. These three groups are arranged in different distances from the camera 110. Ever since photography was invented in the nineteenth century, a still image of the visual scene may look like an illustrative image as shown in FIG. 4. Due to the depth of the field of the camera lens, only one of the three groups of objects may be in focus as decided by a photographer. Other groups of objects may be out of focus. The decision regarding which group is in focus and which group is out of focus is decided by the photographer when the photographer takes the photo. For example, if the photographer focuses the first group of objects 350 when the photo was taken, the first group of objects 350 will be in focus and the second group of objects 360 and the third group of objects 370 will be out of focus. Once the photo is taken, information related to the focused image of one of the groups of objects is recorded, and information related to the other, out of focus groups of objects will be forever lost. When the photo is shown either as a printed picture, or displayed in a display device, a viewer can only see the focused image of the first group of objects 350, and will not be able to see the focused images of the second or third groups of objects 360 and 370. This is the shortcoming of conventional photography and this shortcoming remains in the field of photography ever since the photography was invented almost 200 years ago.

The stereoscopic dynamic image of the visual scene is designed to overcome the above mentioned shortcoming of conventional photography and provide additional information to the viewers so that when the viewer is viewing the display of the stereoscopic dynamic image, the viewer is provided with fully immersive and vivid focused images of any groups of objects of the visual scene. The viewer has total freedom to see focused images of any groups of objects in the visual scene, as if the viewer was the photographer, and the focal selection is no longer limited by the focus originally chosen by the photographer.

Referring now back to FIG. 2, an exemplary stereoscopic dynamic image capturing of the exemplary visual scene using the multi-camera stereoscopic dynamic imaging system is shown according to certain embodiments of the present disclosure. In certain embodiments, a stereoscopic dynamic image captured by the multi-camera stereoscopic dynamic imaging system 100 includes the first set of focused images, the second set of focused images, the third set of focused images, and the fourth set of focused images and each of focused image of each of the first set of focused images, the second set of focused images, the third set of focused images, and the fourth set of focused images is associated with a corresponding focusing distance of each group of one or more objects.

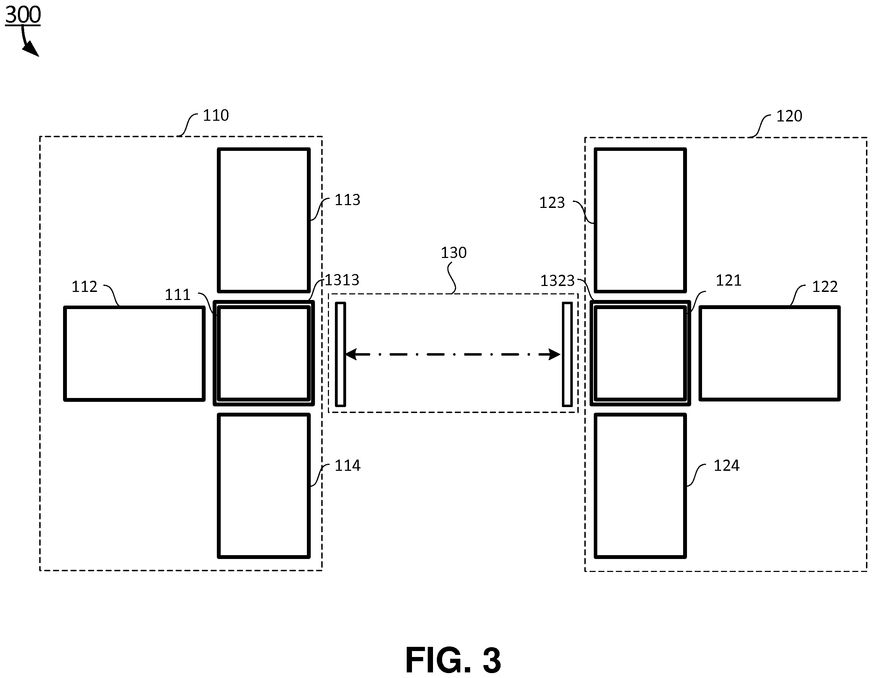

In one embodiment as shown in FIG. 3, the first camera assembly 110 has four cameras 111, 112, 113, and 114, and the second camera assembly 120 has four cameras 121, 122, 123, and 124. Each of the four cameras 111, 112, 113, and 114 is optically coupled with a first beam splitter 1313. Each of the four cameras 121, 122, 123, and 124 is optically coupled with a second beam splitter 1323. The first beam splitter 1313 and the second beam splitter 1323 are optically coupled with an optical medium 130 to form share the first optical path 161, the second optical path 162, the third optical path 163, and the fourth optical path 164. Each of the cameras 111, 112, 113, and 114 of the first camera assembly 110 and each of the cameras 121, 122, 123, and 124 of the second camera assembly 120 may be used to track one group of one or more objects of the visual scene. For example, the camera 111 of the first camera assembly 110 and the camera 121 of the second camera assembly 120 may be used to track the first group 350 of one or more objects, and capture the first focused image of the first set of focused images and the first focused image of the second set of focused images. The camera 112 of the first camera assembly 110 and the camera 122 of the second camera assembly 120 may be used to track the second group 360 of one or more objects, and capture the second focused image of the first set of focused images and the second focused image of the second set of focused images. The camera 113 of the first camera assembly 110 and the camera 123 of the second camera assembly 120 may be used to track the third group 370 of one or more objects, and capture the third focused image of the first set of focused images and the third focused image of the second set of focused images.

In certain embodiments, the multiple objects within the visual scene may be divided into one or more groups of objects, and each group includes one or more objects within a predetermined distance range. In certain embodiments, the stereoscopic dynamic image captured by the dual camera stereoscopic dynamic imaging system 100 includes: the first set of focused images, the second set of focused images, the third set of focused images, and the fourth set of focused images. Each of the first set of focused images, the second set of focused images, the third set of focused images, and the fourth set of focused images includes a same number of focused images, and each focused image is focused on a group of one or more objects within the predetermined distance range.

The information captured by the first set of focused images, the second set of focused images, the third set of focused images, and the fourth set of focused images is much more than a focused image of conventional photo. In one embodiment, the stereoscopic dynamic image captured by the dual camera stereoscopic dynamic imaging system 100 includes: a first focused image of the first set of focused images, a first focused image of the second set of focused images, a first focused image of the third set of focused images, a first focused image of the fourth set of focused images, a second focused image of the first set of focused images, a second focused image of the second set of focused images, a second focused image of the third set of focused images, a second focused image of the fourth set of focused images, a third focused image of the first set of focused images, a third focused image of the second set of focused images, a third focused image of the third set of focused images, and a third focused image of the fourth set of focused images.

Each of the first focused image of the first set of focused images, the first focused image of the second set of focused images, the first focused image of the third set of focused images, and the first focused image of the fourth set of focused images is focused on a first group of one or more objects within a near focal depth, and the near focal depth is within a range less than about 30% of a distance between the first camera assembly 110 and the second camera assembly 120 to infinity of the visual scene.

Each of the second focused image of the first set of focused images, the second focused image of the second set of focused images, the second focused image of the third set of focused images, and the second focused image of the fourth set of focused images is focused on a second group of one or more objects within a medium focal depth, and the medium focal depth is about 30% to 60% of the distance between the first camera assembly 110 and the second camera assembly 120 to the infinity of the visual scene.

Each of the third focused image of the first set of focused images, the third focused image of the second set of focused images, the third focused image of the third set of focused images, and the third focused image of the fourth set of focused images is focused on a third group of one or more objects within the far focal depth, wherein the far focal depth is within a range greater than 60% of the distance between the first camera assembly 110 and the second camera assembly 120 to the infinity of the visual scene.

In certain embodiments, the first camera assembly 110 and the second camera assembly 120 automatically evaluate, focus and track on each of the one or more groups of one or more objects through each of the first auto-focus lenses 1112, and each of the second auto-focus lenses 1112. In one embodiment, the first camera assembly 110 and the second camera assembly 120 automatically evaluate, focus and track on each of the one or more groups of one or more objects through each of the first auto-focus lenses 1112, and each of the second auto-focus lenses 1112 over the first optical path 161, the second optical path 162, the third optical path 163 and the fourth optical path 164. In another embodiment, the first camera assembly 110 and the second camera assembly 120 automatically evaluate, focus and track on each of the one or more groups of one or more objects through a second lens system sharing the first optical path 161, the second optical path 162, the third optical path 163 and the fourth optical path 164. In yet another embodiment, the first camera assembly 110 and the second camera assembly 120 automatically evaluate, focus and track on each of the one or more groups of one or more objects through an ancillary optical path.

In certain embodiments, these three focused images of the first set of focused images, the second set of focused images, the third set of focused images, and the fourth set of focused images include certain redundant information. For example, only the portion of the first group of objects 350 on the first focused image, the portion of the second group of objects 360 on the second focused image, the portion of the third group of objects 370 and the portion of the background 380 on the third focused image are important. Everywhere else on the first focused image, the second focused image, the third focused image are not as important because it is out of focus. In certain embodiments, the image processing device 122 may be used to reduce the image file data size by removing the redundant and out of focus portions of the first focused image, the second focused image, the third focused image, and the fourth focused image.

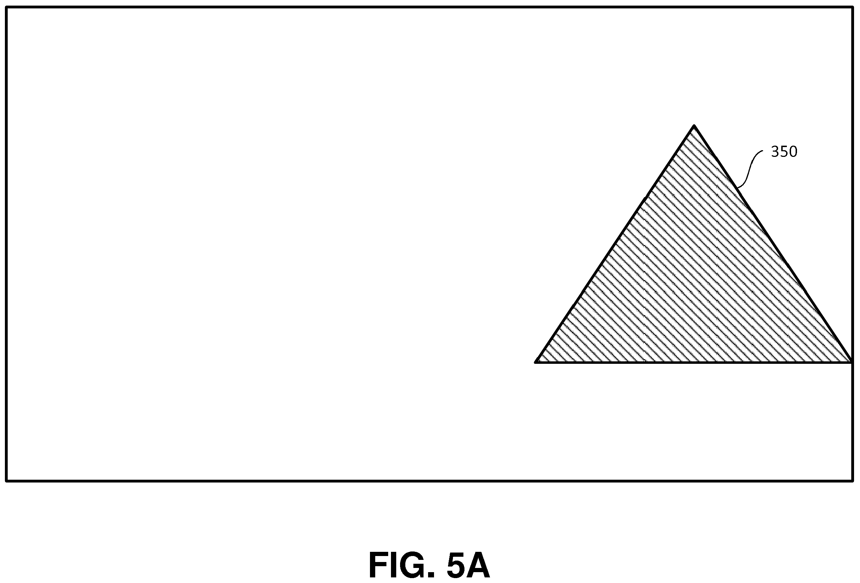

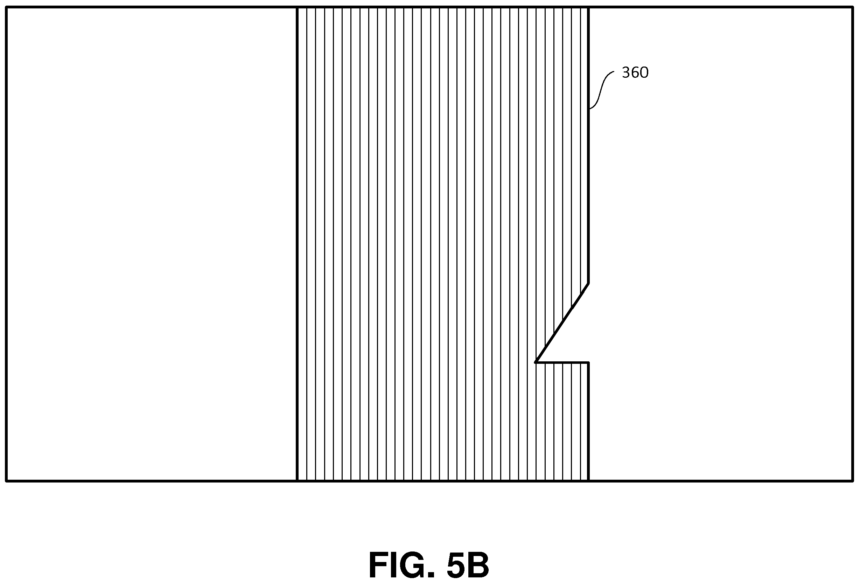

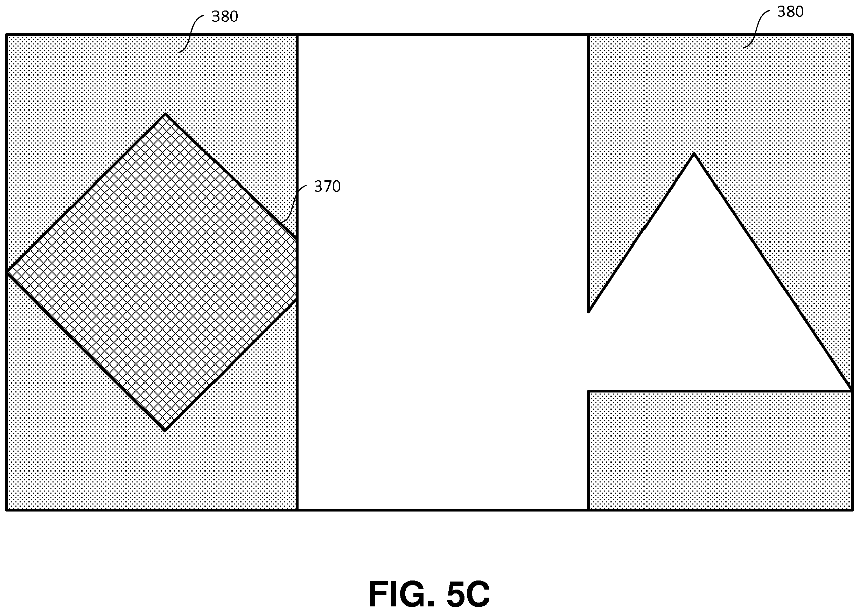

In certain embodiments, a boundary detection software of the computer executable instructions 154 may be used to perform following functions:
detecting the border of the first group of objects 350 of the first focused image, and removing the image data that is not within the border of the first group of objects 350 of the first focused image of the first set of focused images, the second set of focused images, the third set of focused images, and the fourth set of focused images, as shown in FIG. 5A;
detecting the border of the second group of objects 360 of the second focused image, and removing the image data that is not within the border of the second group of objects 360 of the second focused image of the first set of focused images, the second set of focused images, the third set of focused images, and the fourth set of focused images, as shown in FIG. 5B; and
detecting the border of the third group of objects 370 of the third focused image, and removing the image data that is not within the border of the third group of objects 370 and the background 380 of the visual scene of the third focused image, as shown in FIG. 5C.

In certain embodiments, the first camera assembly 110 and the second camera assembly 120 automatically evaluate, focus and track on each of the one or more groups of one or more objects through each of the first auto-focus lenses 1112, and each of the second auto-focus lenses 1112. In one embodiment, the first camera assembly 110 and the second camera assembly 120 automatically evaluate, focus and track on each of the one or more groups of one or more objects through each of the first auto-focus lenses 1112, and each of the second auto-focus lenses 1112 over the first optical path 161, the second optical path 162, the third optical path 163 and the fourth optical path 164. In another embodiment, the first camera assembly 110 and the second camera assembly 120 automatically evaluate, focus and track on each of the one or more groups of one or more objects through a second lens system sharing the first optical path 161, the second optical path 162, the third optical path 163 and the fourth optical path 164. In yet another embodiment, the first camera assembly 110 and the second camera assembly 120 automatically evaluate, focus and track on each of the one or more groups of one or more objects through an ancillary optical path.

The present disclosure also relates to a stereoscopic dynamic video recording system having the multi-camera stereoscopic dynamic imaging system 100.

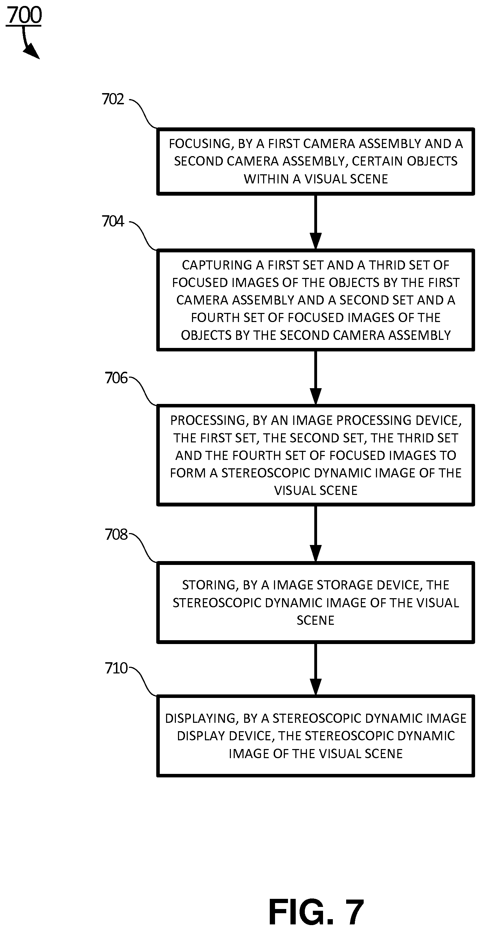

In another aspect, the present disclosure relates to a method 700 of capturing a stereoscopic dynamic image using a multi-camera stereoscopic dynamic imaging system 100 as shown in FIG. 7. In certain embodiments, the method includes one or more of following operations:
At block 702, the stereoscopic dynamic imaging system 140 of the multi-camera stereoscopic dynamic imaging system 100 evaluates using each of a first group of cameras of a first camera assembly 110 and each of a second group of cameras of a second camera assembly 120, respectively, focusing distances of multiple objects within a visual scene. The multiple objects may be divided into one or more groups of objects, and each group includes one or more objects within a predetermined distance range when each of the first set of focused images and the third set of focused images is focused at a corresponding group of one or more objects through each of the first group of cameras of the first camera assembly 110, and each of the second set of focused images and the fourth set of focused images is focused at the corresponding group of one or more objects through the each of the second group of cameras of the second camera assembly 120. In one embodiment as shown in FIG. 2, the first camera assembly 110 includes three cameras 111, 112, and 113, and the second camera assembly 120 includes three cameras 121, 122, and 123. In another embodiment as shown in FIG. 3, the first camera assembly 110 includes four cameras 111, 112, 113, and 114, and the second camera assembly 120 includes four cameras 121, 122, 123, and 124.

In certain embodiments, each of the first set of cameras includes: a first active polarizing filter 1111, an auto-focus lens 1112, a first sensor 1113, and a first communication channel 1114. The first active polarizing filter 1111 is used to switch between the first optical path 161 and the third optical path 163 controlled by a synchronous polarization control unit 144 of the stereoscopic dynamic imaging system 140. The auto-focus lens 1112 is used to focus on a group of one or more objects. The first sensor 1113 captures image signal of a focused image of the group of one or more objects focused by the auto-focus lens 1112. The first communication channel 1114 transmits the captured focused image of the group of one or more objects to the stereoscopic dynamic imaging system 140. Each of the second set of cameras includes: a second active polarizing filter 1211, a second auto-focus lens 1212, a second sensor 1213, and a second communication channel 1214. The second active polarizing filter 1211 is used to switch between the second optical path 162 and the fourth optical path 164 controlled by the synchronous polarization control unit 144 of the stereoscopic dynamic imaging system 140. The second auto-focus lens 1212 focuses on a group of one or more objects. The second sensor 1213 captures image signal of a focused image of the group of one or more objects focused by the second auto-focus lens 1212. The second communication channel 1214 transmits the captured focused image of the group of one or more objects to the stereoscopic dynamic imaging system 140.

At block 704, the stereoscopic dynamic imaging system 140 of the multi-camera stereoscopic dynamic imaging system 100 captures image signal of a first set of focused images of the multiple objects through a first optical path 161 and a third set of focused images of the multiple objects through a third optical path 163 by the first camera assembly 110, and image signal of a second set of focused images of the multiple objects through a second optical path 162 and a fourth set of focused images of the multiple objects through a fourth optical path 164 by the second camera assembly 120, respectively.

In certain embodiments, the method may also include: polarizing, by a synchronous polarization control unit 144 of the stereoscopic dynamic imaging system 140, each of the first active polarizing filters 1111 in a same direction as the first static polarizing filter 1312 to open the first optical path 161 and the first group of sub optical paths, and polarizing each of the second active polarizing filters 1211 in a same direction as the second static polarizing filter 1322 to open the second optical path 162 and the second group of sub optical paths during a first image capture cycle, and polarizing, by the synchronous polarization control unit 144 of the stereoscopic dynamic imaging system 140, each of the first active polarizing filters 1111 in a same direction as the second static polarizing filter 1322 to open the third optical path 163 and the third group of sub optical paths, and polarizing each of the second active polarizing filters 1211 in a same direction as the first static polarizing filter 1312 to open the fourth optical path 164 and the fourth group of sub optical paths during a subsequent second image capture cycle. The synchronous polarization control unit 144 of the stereoscopic dynamic imaging system 140 controls the first camera assembly 110 and the second camera assembly 120 such that the first optical path and the second optical path are open and the third optical path and the fourth optical path are closed during the first image capture cycle, and the third optical path and the fourth optical path are open and the first optical path and the second optical path are closed during the subsequent second image capture cycle.

In certain embodiments, the method may include: capturing each of the first set of focused images synchronously with each of the corresponding second set of focused images when each of the one or more groups of one or more objects is detected by the first camera assembly 110 and the second camera assembly 120 to be in focus respectively, and when the first optical path 161, the first group of sub optical paths, the second optical path 162, and the second group of sub optical paths are open, and capturing each of the third set of focused images is captured synchronously with each of the corresponding fourth set of focused images when each of the one or more groups of one or more objects is detected by the first camera assembly 110 and the second camera assembly 120 to be in focus respectively, and when the third optical path 163, the third group of sub optical paths, the fourth optical path 164, and the fourth group of sub optical paths are open.

In certain embodiments, during the first image capture cycle, the method may include: capturing, by each of the first sensors 1113, a focused image of the first set of focused images and related data when a group of one or more objects is detected to be in focus, capturing, by each of the second sensors 1213, a focused image of the second set of focused images and related data when a corresponding group of one or more objects is detected to be in focus, and transmitting the focused image of the first set of focused images captured and the focused image of the second set of focused images captured and their related data to the stereoscopic dynamic imaging system 140.

In certain embodiments, during the second image capture cycle, the method may include: capturing, by each of the first sensors 1113, a focused image of the third set of focused images and related data when a group of one or more objects is detected to be in focus, capturing, by each of the second sensors 1213, a focused image of the fourth set of focused images and related data when a corresponding group of one or more objects is detected to be in focus, and transmitting the focused image of the third set of focused images captured and the focused image of the fourth set of focused images captured and their related data to the stereoscopic dynamic imaging system 140.

In certain embodiments, the method may also include: repeating the operations performed during the first image capture cycle and the subsequent second image capture cycle for each of the one or more groups of one or more objects until each of the first set of focused images, the second set of focused images, the third set of focused images, and the fourth set of focused images is captured.

In certain embodiments, the method may also include: recording related data of the first set of focused images, the second set of focused images, the third set of focused images and the fourth set of focused images. The related data of the first set of focused images, the second set of focused images, the third set of focused images and the fourth set of focused images includes: a total number of images captured in each of the first set of focused images, the second set of focused images, the third set of focused images and the fourth set of focused images, a time when each of the first set of focused images, the second set of focused images, the third set of focused images and the fourth set of focused images is captured, one or more optical conditions when each of the first set of focused images, the second set of focused images, the third set of focused images and the fourth set of focused images is captured, GPS location coordinates where each of the first set of focused images, the second set of focused images, the third set of focused images and the fourth set of focused images is captured, data needed to determine focusing distances to each of the one or more groups of one or more objects within the visual scene for each of the first set of focused images, the second set of focused images, the third set of focused images and the fourth set of focused images is captured, and data needed to determine the boundaries of each of the one or more groups of one or more objects within the visual scene for each of the first set of focused images, the second set of focused images, the third set of focused images and the fourth set of focused images is captured.

In one embodiment, the stereoscopic dynamic image captured by the dual camera stereoscopic dynamic imaging system 100 includes: a first focused image of the first set of focused images, a first focused image of the second set of focused images, a first focused image of the third set of focused images, a first focused image of the fourth set of focused images, a second focused image of the first set of focused images, a second focused image of the second set of focused images, a second focused image of the third set of focused images, a second focused image of the fourth set of focused images, a third focused image of the first set of focused images, a third focused image of the second set of focused images, a third focused image of the third set of focused images, and a third focused image of the fourth set of focused images.

Each of the first focused image of the first set of focused images, the first focused image of the second set of focused images, the first focused image of the third set of focused images, and the first focused image of the fourth set of focused images is focused on a first group of one or more objects within a near focal depth, and the near focal depth is within a range less than about 30% of a distance between the first camera assembly 110 and the second camera assembly 120 to infinity of the visual scene.

Each of the second focused image of the first set of focused images, the second focused image of the second set of focused images, the second focused image of the third set of focused images, and the second focused image of the fourth set of focused images is focused on a second group of one or more objects within a medium focal depth, and the medium focal depth is about 30% to 60% of the distance between the first camera assembly 110 and the second camera assembly 120 to the infinity of the visual scene.

Each of the third focused image of the first set of focused images, the third focused image of the second set of focused images, the third focused image of the third set of focused images, and the third focused image of the fourth set of focused images is focused on a third group of one or more objects within the far focal depth, wherein the far focal depth is within a range greater than 60% of the distance between the first camera assembly 110 and the second camera assembly 120 to the infinity of the visual scene.

In certain embodiments, the related data of each of the first set of focused images, the second set of focused images, the third set of focused images and the fourth set of focused images may be captured at the same time as these sets of focused images. The related data of each of the first set of focused images, the second set of focused images, the third set of focused images and the fourth set of focused images includes: a total number of focused images captured in each of the first set of focused images, the second set of focused images, the third set of focused images, and the fourth set of focused images, a time when each of the first set of focused images, the second set of focused images, the third set of focused images and the fourth set of focused images is captured, one or more optical conditions when each of the first set of focused images, the second set of focused images, the third set of focused images and the fourth set of focused images is captured, GPS location coordinates where each of the first set of focused images, the second set of focused images, the third set of focused images and the fourth set of focused images is captured, data needed to determine focusing distances to each of the one or more groups of one or more objects within the visual scene for each of the first set of focused images, the second set of focused images, the third set of focused images and the fourth set of focused images is captured, and data needed to determine the boundaries of each of the one or more groups of one or more objects within the visual scene for each of the first set of focused images, the second set of focused images, the third set of focused images and the fourth set of focused images is captured.

At block 706, the image signal mixer 141 of the stereoscopic dynamic imaging system 140 of the multi-camera stereoscopic dynamic imaging system 100 receives the image signal of each of the first set of focused images, the second set of focused images, the third set of focused images and the fourth set of focused images through the respective first communication channels of the first camera assembly 110, and the second communication channel 129 of the second camera assembly 120, and the related data of each of the first set of focused images, the second set of focused images, the third set of focused images and the fourth set of focused images. The image processing device 142 of the stereoscopic dynamic imaging system 140 of the multi-camera stereoscopic dynamic imaging system 100 processes the image signal of each of the first set of focused images, the second set of focused images, the third set of focused images and the fourth set of focused images received by the image signal mixer 141 to form the stereoscopic dynamic image.

At block 708, the image storage device 143 of the stereoscopic dynamic imaging system 140 of the multi-camera stereoscopic dynamic imaging system 100 stores the stereoscopic dynamic image processed by the image processing device 142. The information of the stereoscopic dynamic image stored in the image storage device 143 includes the first set of focused images, the second set of focused images, the third set of focused images and the fourth set of focused images and the related data of the first set of focused images, the second set of focused images, the third set of focused images and the fourth set of focused images.

At block 710, the stereoscopic dynamic image display device 145 displays the stereoscopic dynamic image on the stereoscopic dynamic image display device 145. In one embodiment, the stereoscopic dynamic image display device 145 may include a gaze detection device. The gaze detection device is a device for measuring eye positions and eye movement of a viewer. When a viewer moves his/her eyes towards a group of one or more objects, the gaze detection device detects the viewer's eyes are aimed at the group of one or more objects, focused images from each of the first set of focused images, the second set of focused images, the third set of the focused images, and the fourth set of focused images of the stereoscopic dynamic image corresponding to the group of one or more objects are displayed dynamically and interactively on the stereoscopic dynamic image display device 145. In another embodiment, the stereoscopic dynamic image display device 145 may include a touch screen input device or a mouse pointing device. When the viewer touches a group of one or more objects on the screen, or uses the mouse to click the group of one or more objects on the screen, focused images from each of the first set of focused images, the second set of focused images, the third set of the focused images, and the fourth set of focused images of the stereoscopic dynamic image corresponding to the group of one or more objects are displayed dynamically and interactively on the stereoscopic dynamic image display device 145.

In certain embodiments, the stereoscopic dynamic image display device 145 may include monitors, television sets, flat panel displays, touch screen displays, computer monitors, laptop computer screens, tablet display screens, digital picture frames, smartphone display screens, as well as any digital image display devices. The stereoscopic dynamic image display device 145 may include a gaze detection device to detect the viewer's eye movement, a touch screen or a mouse to receive viewer's input.

In certain embodiments, when the stereoscopic dynamic image display device 145 does not include the additional equipment as discussed above, the stereoscopic dynamic image may be displayed with each of set of focused images overlaid, where each of the set of focused images having the redundant and out of focus portions removed from the set of focused images.

In yet another aspect, the present disclosure relates to a computer program product operable on a stereoscopic dynamic imaging system controller 150 for capturing a stereoscopic dynamic image. The stereoscopic dynamic imaging system controller 150 includes a processor 151 and a non-transitory computer memory 152 readable by the stereoscopic dynamic imaging system controller 150 configured to store a dynamic imaging system control program for execution by the processor 151 for performing a method of capturing the stereoscopic dynamic image of a visual scene.

In certain embodiments, the method includes: evaluating, by each of a first group of cameras of a first camera assembly 110 and each of a second group of cameras of a second camera assembly 120, respectively, focusing distances of multiple objects within a visual scene, and capturing image signal of a first set of focused images of the multiple objects through a first optical path 161 and a third set of focused images of the multiple objects through a third optical path 163 by the first camera assembly 110, and image signal of a second set of focused images of the multiple objects through a second optical path 162 and a fourth set of focused images of the multiple objects through a fourth optical path 164 by the second camera assembly 120, respectively. The multiple objects includes one or more groups of objects, and each group has one or more objects within a predetermined distance range. Each of the first set of focused images, the second set of focused images, the third set of focused images, and the fourth set of focused images is focused at a group of one or more objects. In certain embodiments, the method includes: receiving, at an image signal mixer 141 of a stereoscopic dynamic imaging system 140, the image signals of the first set of focused images and the third set of focused images from the first camera assembly 110, and the image signals of the second set of focused images and the fourth set of focused images from the second camera assembly 120, processing, by an image processing device 142 of the stereoscopic dynamic imaging system 140, the image signals of the first set of focused images, the second set of focused images, the third set of focused images and the fourth set of focused images received by the image signal mixer 141 to form the stereoscopic dynamic image, and storing, by an image storage device 143, the stereoscopic dynamic image processed by the image processing device 142. The stereoscopic dynamic image captured by the multi-camera stereoscopic dynamic imaging system 100 includes: the first set of focused images, the second set of focused images, the third set of focused images, and the fourth set of focused images. Each of the first set of focused images, the second set of focused images, the third set of focused images, and the fourth set of focused images includes a same number of focused images, and each focused image is focused on a group of one or more objects within the predetermined distance range.

In certain embodiments, the method may also include: displaying, by a stereoscopic dynamic image display device 145, the stereoscopic dynamic image. In one embodiment, the stereoscopic dynamic image display device may include a gaze detection device which measures eye positions and eye movement of a viewer. When the viewer moves his/her eyes towards a group of one or more objects as shown on the stereoscopic dynamic image display device, the gaze detection device detects the viewer's eyes are aimed at the group of one or more objects, focused images from each of the first set of focused images, the second set of focused images, the third set of the focused images, and the fourth set of focused images of the stereoscopic dynamic image corresponding to the group of one or more objects are displayed dynamically and interactively on the stereoscopic dynamic image display device. In another embodiment, the stereoscopic dynamic image display device may include a touch screen input device or a mouse pointing device. When the viewer touches a group of one or more objects, or uses the mouse to click the group of one or more objects on the screen as shown on the stereoscopic dynamic image display device, focused images from each of the first set of focused images, the second set of focused images, the third set of the focused images, and the fourth set of focused images of the stereoscopic dynamic image corresponding to the group of one or more objects are displayed dynamically and interactively on the stereoscopic dynamic image display device 145.

In certain embodiments, the first optical path 161 includes a first external lens 1311, a first static polarizing filter 1312, a first beam splitter 1313 splitting the first optical path 161 into a first group of sub optical paths, each of the first group of sub optical paths is optically coupled to the first beam splitter 1313. Each of the first group of sub optical paths includes the first active polarizing filters 1111, the first auto-focus lens 1112, and the first sensor 1113, and each of the first group of sub optical paths focuses on one of the one or more groups of one or more objects within the visual scene. The second optical path 162 includes a second external lens 1321, a second static polarizing filter 1322, a second beam splitter 1323 splitting the second optical path 162 into a second group of sub optical paths, each of the second group of sub optical paths is optically coupled to the first beam splitter 1313. Each of the second group of sub optical paths includes the second active polarizing filters 1211, the second auto-focus lens 1212, and the second sensor 1113. Each of the second group of sub optical paths focuses on one of the one or more groups of one or more objects within the visual scene.

In certain embodiments, the third optical path 163 includes the second external lens 1321, the second static polarizing filter 1322, the second beam splitter 1323, an optical medium 130, and the first beam splitter 1313 splitting the third optical path 163 into a third group of sub optical paths, and each of the third group of sub optical paths is optically coupled to the first beam splitter 1313. Each of the third group of sub optical paths includes the first active polarizing filters 1111, the first auto-focus lens 1112, and the first sensor 1113, and each of the third group of sub optical paths focuses on one of the one or more groups of one or more objects within the visual scene. The fourth optical path 164 includes the first external lens 1311, the first static polarizing filter 1312, the first beam splitter 1313, the optical medium 130, and the second beam splitter 1323 splitting the fourth optical path 164 into a fourth group of sub optical paths, each of the fourth group of sub optical paths is optically coupled to the second beam splitter 1323. Each of the fourth group of sub optical paths includes the second active polarizing filters 1211, the second auto-focus lens 1212, and the second sensor 1213, and each of the fourth group of sub optical paths focuses on one of the one or more groups of one or more objects within the visual scene.

In certain embodiments, the method may also include: polarizing, by a synchronous polarization control unit 144 of the stereoscopic dynamic imaging system 140, each of the first active polarizing filters 1111 in a same direction as the first static polarizing filter 1312 to open the first optical path 161 and the first group of sub optical paths, and polarizing each of the second active polarizing filters 1211 in a same direction as the second static polarizing filter 1322 to open the second optical path 162 and the second group of sub optical paths during a first image capture cycle, and polarizing, by the synchronous polarization control unit 144 of the stereoscopic dynamic imaging system 140, each of the first active polarizing filters 1111 in a same direction as the second static polarizing filter 1322 to open the third optical path 163 and the third group of sub optical paths, and polarizing each of the second active polarizing filters 1211 in a same direction as the first static polarizing filter 1312 to open the fourth optical path 164 and the fourth group of sub optical paths during a subsequent second image capture cycle. The synchronous polarization control unit 144 of the stereoscopic dynamic imaging system 140 controls the first camera assembly 110 and the second camera assembly 120 such that the first optical path and the second optical path are open and the third optical path and the fourth optical path are closed during the first image capture cycle, and the third optical path and the fourth optical path are open and the first optical path and the second optical path are closed during the subsequent second image capture cycle.

In certain embodiments, the method may include: capturing each of the first set of focused images synchronously with each of the corresponding second set of focused images when each of the one or more groups of one or more objects is detected by the first camera assembly 110 and the second camera assembly 120 to be in focus respectively, and when the first optical path 161, the first group of sub optical paths, the second optical path 162, and the second group of sub optical paths are open, and capturing each of the third set of focused images is captured synchronously with each of the corresponding fourth set of focused images when each of the one or more groups of one or more objects is detected by the first camera assembly 110 and the second camera assembly 120 to be in focus respectively, and when the third optical path 163, the third group of sub optical paths, the fourth optical path 164, and the fourth group of sub optical paths are open.

In certain embodiments, during the first image capture cycle, the method may include: capturing, by each of the first sensors 1113, a focused image of the first set of focused images and related data when a group of one or more objects is detected to be in focus, capturing, by each of the second sensors 1213, a focused image of the second set of focused images and related data when a corresponding group of one or more objects is detected to be in focus, and transmitting the focused image of the first set of focused images captured and the focused image of the second set of focused images captured and their related data to the stereoscopic dynamic imaging system 140.

In certain embodiments, during the second image capture cycle, the method may include: capturing, by each of the first sensors 1113, a focused image of the third set of focused images and related data when a group of one or more objects is detected to be in focus, capturing, by each of the second sensors 1213, a focused image of the fourth set of focused images and related data when a corresponding group of one or more objects is detected to be in focus, and transmitting the focused image of the third set of focused images captured and the focused image of the fourth set of focused images captured and their related data to the stereoscopic dynamic imaging system 140.

In certain embodiments, the method may also include: repeating the operations performed during the first image capture cycle and the subsequent second image capture cycle for each of the one or more groups of one or more objects until each of the first set of focused images, the second set of focused images, the third set of focused images, and the fourth set of focused images is captured.

In certain embodiments, the related data of the first set of focused images, the second set of focused images, the third set of focused images and the fourth set of focused images includes: a total number of images captured in each of the first set of focused images, the second set of focused images, the third set of focused images and the fourth set of focused images, a time when each of the first set of focused images, the second set of focused images, the third set of focused images and the fourth set of focused images is captured, one or more optical conditions when each of the first set of focused images, the second set of focused images, the third set of focused images and the fourth set of focused images is captured, GPS location coordinates where each of the first set of focused images, the second set of focused images, the third set of focused images and the fourth set of focused images is captured, data needed to determine focusing distances to each of the one or more groups of one or more objects within the visual scene for each of the first set of focused images, the second set of focused images, the third set of focused images and the fourth set of focused images is captured, and data needed to determine the boundaries of each of the one or more groups of one or more objects within the visual scene for each of the first set of focused images, the second set of focused images, the third set of focused images and the fourth set of focused images is captured.

In one embodiment, the method may include: capturing a first focused image of the first set of focused images, a first focused image of the second set of focused images, a first focused image of the third set of focused images, and a first focused image of the fourth set of focused images, capturing a second focused image of the first set of focused images, a second focused image of the second set of focused images, a second focused image of the third set of focused images, and a second focused image of the fourth set of focused images, and capturing a third focused image of the first set of focused images, a third focused image of the second set of focused images, a third focused image of the third set of focused images, and a third focused image of the fourth set of focused images.

Each of the first focused images of the first set of focused images, the second set of focused images, the third set of focused images, and the fourth set of focused images is focused on a first group of one or more objects within a near focal depth, and the near focal depth is within a range less than about 30% of a distance between the first camera assembly 110 and the second camera assembly 120 to infinity of the visual scene.

Each of the second focused images of the first set of focused images, the second set of focused images, the third set of focused images, and the fourth set of focused images is focused on a second group of one or more objects within a medium focal depth, and the medium focal depth is about 30% to 60% of the distance between the first camera assembly 110 and the second camera assembly 120 to the infinity of the visual scene.

Each of the third focused images of the first set of focused images, the second set of focused images, the third set of focused images, and the fourth set of focused images is focused on a third group of one or more objects within the far focal depth, and the far focal depth is within a range greater than 60% of the distance between the first camera assembly 110 and the second camera assembly 120 to the infinity of the visual scene.

The foregoing description of the exemplary embodiments of the disclosure has been presented only for the purposes of illustration and description and is not intended to be exhaustive or to limit the disclosure to the precise forms disclosed. Many modifications and variations are possible in light of the above teaching.

The embodiments were chosen and described in order to explain the principles of the disclosure and their practical application so as to enable others skilled in the art to utilize the disclosure and various embodiments and with various modifications as are suited to the particular use contemplated. Alternative embodiments will become apparent to those skilled in the art to which the present disclosure pertains without departing from its spirit and scope. Accordingly, the scope of the present disclosure is defined by the appended claims rather than the foregoing description and the exemplary embodiments described therein.

Aspects of present disclosure relates to multi-camera stereoscopic dynamic imaging systems and methods of capturing stereoscopic dynamic images. In certain embodiments, the multi-camera stereoscopic dynamic imaging system includes: a first camera assembly, a second camera assembly optically coupled to the first camera assembly via an optical medium, a stereoscopic dynamic imaging system, and a stereoscopic dynamic image display device. The first camera assembly capture a first set of focused images and a third set of focused images of multiple objects within a visual scene and the second camera assembly captures image signal of a second set of focused images and a fourth set of focused images of the multiple objects. The image signals are transmitted to and processed by a stereoscopic dynamic imaging system to form the stereoscopic dynamic image. The stereoscopic dynamic image may be dynamically and interactively displayed by the stereoscopic dynamic image display device.

## Claims

1. A multi-camera stereoscopic dynamic imaging system, comprising:
a first camera assembly having a first set of cameras to capture image signal of a first set of focused images of a plurality of objects within a visual scene through a first optical path, and image signal of a third set of focused images of the plurality of objects within the visual scene through a third optical path, and transmit the captured image signals to a stereoscopic dynamic imaging system, wherein the plurality of objects comprises one or more groups of objects, each group having one or more objects within a predetermined distance range, and each of the first set of focused images and the third set of focused images is focused at each of the one or more groups of one or more objects;
a second camera assembly optically coupled to the first camera assembly via an optical medium, wherein the second camera assembly comprises a second set of cameras to capture image signal of a second set of focused images of the plurality of objects within the visual scene through a second optical path, and image signal of a fourth set of focused images of the plurality of objects within the visual scene through a fourth optical path, and transmit the captured image signals to the stereoscopic dynamic imaging system, wherein each of the second set of focused images and the fourth set of focused images is focused at each of the one or more groups of one or more objects; and
the stereoscopic dynamic imaging system to receive, and process the image signal of the first set of focused images and the third set of focused images captured by the first camera assembly, and the image signal of the second set of focused images and the fourth set of focused images captured by the second camera assembly to form a stereoscopic dynamic image and to store the stereoscopic dynamic image.

2. The multi-camera stereoscopic dynamic imaging system of claim 1, wherein
each of the first set of cameras comprises:
a first active polarizing filter to switch between the first optical path and the third optical path controlled by a synchronous polarization control unit of the stereoscopic dynamic imaging system;
an auto-focus lens to focus on a group of one or more objects;
a first sensor to capture image signal of a focused image of the group of one or more objects focused by the auto-focus lens; and
a first communication channel to transmit the captured focused image of the group of one or more objects to the stereoscopic dynamic imaging system; and
each of the second set of cameras comprises:
a second active polarizing filter to switch between the second optical path and the fourth optical path controlled by the synchronous polarization control unit of the stereoscopic dynamic imaging system;
a second auto-focus lens to focus on a group of one or more objects;
a second sensor to capture image signal of a focused image of the group of one or more objects focused by the second auto-focus lens; and
a second communication channel to transmit the captured focused image of the group of one or more objects to the stereoscopic dynamic imaging system.

3. The multi-camera stereoscopic dynamic imaging system of claim 2, wherein
the first optical path comprises a first external lens, a first static polarizing filter, a first beam splitter splitting the first optical path into a first plurality of sub optical paths, each of the first plurality of sub optical paths is optically coupled to the first beam splitter, wherein each of the first plurality of sub optical paths comprises a corresponding first active polarizing filter, a corresponding first auto-focus lens, and a corresponding first sensor, and each of the first plurality of sub optical paths focuses on one of the one or more groups of one or more objects within the visual scene;
the second optical path comprises a second external lens, a second static polarizing filter, a second beam splitter splitting the second optical path into a second plurality of sub optical paths, each of the second plurality of sub optical paths is optically coupled to the first beam splitter, wherein each of the second plurality of sub optical paths comprises a corresponding second active polarizing filter, a corresponding second auto-focus lens, and a corresponding second sensor, and each of the second plurality of sub optical paths focuses on one of the one or more groups of one or more objects within the visual scene;
the third optical path comprises the second external lens, the second static polarizing filter, the second beam splitter, the optical medium, and the first beam splitter splitting the third optical path into a third plurality of sub optical paths, each of the third plurality of sub optical paths is optically coupled to the first beam splitter, wherein each of the third plurality of sub optical paths comprises the corresponding first active polarizing filters, the corresponding first auto-focus lens, and the corresponding first sensor, and each of the third plurality of sub optical paths focuses on one of the one or more groups of one or more objects within the visual scene; and
the fourth optical path comprises the first external lens, the first static polarizing filter, the first beam splitter, the optical medium, and the second beam splitter splitting the fourth optical path into a fourth plurality of sub optical paths, each of the fourth plurality of sub optical paths is optically coupled to the second beam splitter, wherein each of the fourth plurality of sub optical paths comprises the corresponding second active polarizing filters, the corresponding second auto-focus lens, and the corresponding second sensor, and each of the fourth plurality of sub optical paths focuses on one of the one or more groups of one or more objects within the visual scene.

4. The multi-camera stereoscopic dynamic imaging system of claim 2 or 3, wherein
the first optical path opens when each of the plurality of the first active polarizing filters is polarized in a same direction as the first static polarizing filter;
the second optical path opens when each of the plurality of the second active polarizing filters is polarized in a same direction as the second static polarizing filter;
the third optical path opens when each of the plurality of the first active polarizing filters is polarized in the same direction as the second static polarizing filter; and
the fourth optical path opens when each of the plurality of the second active polarizing filters is polarized in the same direction as the first static polarizing filter,
wherein the synchronous polarization control unit of the stereoscopic dynamic imaging system controls the first camera assembly and the second camera assembly such that the first optical path and the second optical path are open and the third optical path and the fourth optical path are closed in during a first image capture cycle, and the third optical path and the fourth optical path are open and the first optical path and the second optical path are closed during a subsequent second image capture cycle;
wherein preferably
each of the first set of focused images is captured synchronously with each of the corresponding second set of focused images when each of the one or more groups of one or more objects is detected by the first camera assembly and the second camera assembly to be in focus respectively, and when the first optical path and the second optical path are open; and
each of the third set of focused images is captured synchronously with each of the corresponding fourth set of focused images when each of the one or more groups of one or more objects is detected by the first camera assembly and the second camera assembly to be in focus respectively, and when the third optical path and the fourth optical path are open.

5. The multi-camera stereoscopic dynamic imaging system of claim 4, wherein when each of one or more groups of one or more objects is detected to be in focus by each of the plurality of first sensors and the plurality of second sensors, each of the plurality of the first sensors captures a focused image of the first set of focused images and related data, and transmits each of the focused images of the first set of focused images captured and the related data to the stereoscopic dynamic imaging system, and each of the plurality of the second sensors captures a focused image of the second set of focused images and related data, and transmits each of the focused images of the second set of focused images captured and the related data to the stereoscopic dynamic imaging system, during the first image capture cycle, and each of the plurality of the first sensors captures a focused image of the third set of focused images and related data, and transmits each of the focused images of the third set of focused images captured and the related data to the stereoscopic dynamic imaging system, and each of the plurality of the second sensors captures a focused image of the fourth set of focused images and related data, and transmits each of the focused images of the fourth set of focused images captured and the related data to the stereoscopic dynamic imaging system during the subsequent second image capture cycle;
wherein the related data of the first set of focused images, the second set of focused images, the third set of focused images and the fourth set of focused images preferably comprises:
a total number of images captured in each of the first set of focused images, the second set of focused images, the third set of focused images and the fourth set of focused images;
a time when each of the first set of focused images, the second set of focused images, the third set of focused images and the fourth set of focused images is captured;
one or more optical conditions when each of the first set of focused images, the second set of focused images, the third set of focused images and the fourth set of focused images is captured;
GPS location coordinates where each of the first set of focused images, the second set of focused images, the third set of focused images and the fourth set of focused images is captured;
data needed to determine focusing distances to each of the one or more groups of one or more objects within the visual scene for each of the first set of focused images, the second set of focused images, the third set of focused images and the fourth set of focused images is captured; and
data needed to determine the boundaries of each of the one or more groups of one or more objects within the visual scene for each of the first set of focused images, the second set of focused images, the third set of focused images and the fourth set of focused images is captured.

6. The multi-camera stereoscopic dynamic imaging system of claim 5, wherein the stereoscopic dynamic imaging system comprises:
an image signal mixer to receive the image signals of the first set of focused images and the third set of focused images from the plurality of first communication channels, the image signals of the second set of focused images and the fourth set of focused images from the plurality of second communication channels;
an image processing device to process the image signals of the first set of focused images, the second set of focused images, the third set of focused images, and the fourth set of focused images received by the image signal mixer 141 and form the stereoscopic dynamic image;
an image storage device to store the stereoscopic dynamic image processed by the image processing device; and
a stereoscopic dynamic image display device to display the stereoscopic dynamic image, wherein when a viewer moves his/her eyes towards a group of one or more objects and the eye movement is detected by a gaze detection device on the stereoscopic dynamic image display device, or when the viewer touches using a touch screen input device or points using a mouse on the group of one or more objects shown on the stereoscopic dynamic image display device, focused images from each of the first set of focused images, the second set of focused images, the third set of the focused images, and the fourth set of focused images of the stereoscopic dynamic image corresponding to the group of one or more objects are displayed dynamically and interactively on the stereoscopic dynamic image display device.

7. The multi-camera stereoscopic dynamic imaging system of one of claims 1 to 6, wherein the stereoscopic dynamic image captured by the multi-camera stereoscopic dynamic imaging system comprises:
the first set of focused images;
the second set of focused images;
the third set of focused images; and
the fourth set of focused images,
wherein each of the first set of focused images, the second set of focused images, the third set of focused images, and the fourth set of focused images comprises a same number of focused images, each focused image is focused on a group of one or more objects within the predetermined distance range.

8. The multi-camera stereoscopic dynamic imaging system of one of claims 1 to 7, wherein the stereoscopic dynamic image captured by the multi-camera stereoscopic dynamic imaging system comprises:
a first focused image of the first set of focused images, a first focused image of the second set of focused images, a first focused image of the third set of focused images, and a first focused image of the fourth set of focused images, wherein each of the first focused image of the first set of focused images, the first focused image of the second set of focused images, the first focused image of the third set of focused images, and the first focused image of the fourth set of focused images is focused on a first group of one or more objects within a near focal depth, and the near focal depth is within a range less than about 30% of a distance between the first camera assembly and the second camera assembly to infinity of the visual scene;
a second focused image of the first set of focused images, a second focused image of the second set of focused images, a second focused image of the third set of focused images, and a second focused image of the fourth set of focused images, wherein each of the second focused image of the first set of focused images, the second focused image of the second set of focused images, the second focused image of the third set of focused images, and the second focused image of the fourth set of focused images is focused on a second group of one or more objects within a medium focal depth, and the medium focal depth is about 30% to 60% of the distance between the first camera assembly and the second camera assembly to the infinity of the visual scene; and
a third focused image of the first set of focused images, a third focused image of the second set of focused images, a third focused image of the third set of focused images, and a third focused image of the fourth set of focused images, wherein each of the third focused image of the first set of focused images, the third focused image of the second set of focused images, the third focused image of the third set of focused images, and the third focused image of the fourth set of focused images is focused on a third group of one or more objects within the far focal depth, wherein the far focal depth is within a range greater than 60% of the distance between the first camera assembly and the second camera assembly to the infinity of the visual scene;
wherein preferably
the first camera assembly and the second camera assembly automatically evaluate, focus and track on each of the one or more groups of one or more objects through the plurality of first auto-focus lenses and the plurality of second auto-focus lenses over the first optical path, the second optical path, the third optical path and the fourth optical path;
the first camera assembly and the second camera assembly automatically evaluate, focus and track on each of the one or more groups of one or more objects through a second lens system sharing the first optical path, the second optical path, the third optical path and the fourth optical path; and
the first camera assembly and the second camera assembly automatically evaluate, focus and track on each of the one or more groups of one or more objects through an ancillary optical path.

9. A stereoscopic dynamic video recording system comprising the multi-camera stereoscopic dynamic imaging system of one of claims 1 to 8.

10. A method of capturing a stereoscopic dynamic image using a multi-camera stereoscopic dynamic imaging system, comprising:
evaluating, by each of a first plurality of cameras of a first camera assembly and each of a second plurality of cameras of a second camera assembly, respectively, focusing distances of a plurality of objects within a visual scene, wherein the plurality of objects comprises one or more groups of objects, each group having one or more objects within a predetermined distance range;
capturing image signal of a first set of focused images of the plurality of objects through a first optical path and a third set of focused images of the plurality of objects through a third optical path by the first camera assembly, and image signal of a second set of focused images of the plurality of objects through a second optical path and a fourth set of focused images of the plurality of objects through a fourth optical path by the second camera assembly, respectively, when each of the first set of focused images, the second set of focused images, the third set of focused images, and the fourth set of focused images is focused at a group of one or more objects;
receiving, at an image signal mixer of a stereoscopic dynamic imaging system, the image signals of the first set of focused images and the third set of focused images from the first camera assembly, and the image signals of the second set of focused images and the fourth set of focused images from the second camera assembly;
processing, by an image processing device 142 of the stereoscopic dynamic imaging system, the image signals of the first set of focused images, the second set of focused images, the third set of focused images and the fourth set of focused images received by the image signal mixer 141 to form the stereoscopic dynamic image; and
storing, by an image storage device, the stereoscopic dynamic image processed by the image processing device, wherein the stereoscopic dynamic image captured by the multi-camera stereoscopic dynamic imaging system comprises: the first set of focused images, the second set of focused images, the third set of focused images, and the fourth set of focused images, and each of the first set of focused images, the second set of focused images, the third set of focused images, and the fourth set of focused images comprises a same number of focused images, each focused image is focused on a group of one or more objects within the predetermined distance range.

11. The method of claim 10, further comprising:
displaying, by a stereoscopic dynamic image display device, the stereoscopic dynamic image, wherein when a viewer moves his/her eyes towards a group of one or more objects and the eye movement is detected by a gaze detection device on the stereoscopic dynamic image display device, or when the viewer touches using a touch screen input device or points using a mouse on the group of one or more objects shown on the stereoscopic dynamic image display device, focused images from each of the first set of focused images, the second set of focused images, the third set of the focused images, and the fourth set of focused images of the stereoscopic dynamic image corresponding to the group of one or more objects are displayed dynamically and interactively on the stereoscopic dynamic image display device.

12. The method of claim 11, further comprising:
polarizing, by a synchronous polarization control unit of the stereoscopic dynamic imaging system, each of the first active polarizing filters in a same direction as the first static polarizing filter to open the first optical path and the first plurality of sub optical paths, and polarizing each of the second active polarizing filters in a same direction as the second static polarizing filter to open the second optical path and the second plurality of sub optical paths during a first image capture cycle; and
polarizing, by the synchronous polarization control unit of the stereoscopic dynamic imaging system, each of the first active polarizing filters in a same direction as the second static polarizing filter to open the third optical path and the third plurality of sub optical paths, and polarizing each of the second active polarizing filters in a same direction as the first static polarizing filter to open the fourth optical path and the fourth plurality of sub optical paths during a subsequent second image capture cycle,
wherein the synchronous polarization control unit of the stereoscopic dynamic imaging system controls the first camera assembly and the second camera assembly such that the first optical path and the second optical path are open and the third optical path and the fourth optical path are closed in the first image capture cycle, and the third optical path and the fourth optical path are open and the first optical path and the second optical path are closed in the subsequent second image capture cycle.

13. The method of claim 10 or 11, wherein
the first optical path comprises a first external lens, a first static polarizing filter, a first beam splitter splitting the first optical path into a first plurality of sub optical paths, each of the first plurality of sub optical paths is optically coupled to the first beam splitter, wherein each of the first plurality of sub optical paths comprises a corresponding first active polarizing filter, a corresponding first auto-focus lens, and a corresponding first sensor, and each of the first plurality of sub optical paths focuses on one of the one or more groups of one or more objects within the visual scene;
the second optical path comprises a second external lens, a second static polarizing filter, a second beam splitter splitting the second optical path into a second plurality of sub optical paths, each of the second plurality of sub optical paths is optically coupled to the first beam splitter, wherein each of the second plurality of sub optical paths comprises a corresponding second active polarizing filter, a corresponding second auto-focus lens, and a corresponding second sensor, and each of the second plurality of sub optical paths focuses on one of the one or more groups of one or more objects within the visual scene;
the third optical path comprises the second external lens, the second static polarizing filter, the second beam splitter, an optical medium, and the first beam splitter splitting the third optical path into a third plurality of sub optical paths, each of the third plurality of sub optical paths is optically coupled to the first beam splitter, wherein each of the third plurality of sub optical paths comprises the corresponding first active polarizing filter, the corresponding first auto-focus lens, and the corresponding first sensor, and each of the third plurality of sub optical paths focuses on one of the one or more groups of one or more objects within the visual scene; and
the fourth optical path comprises the first external lens, the first static polarizing filter, the first beam splitter, the optical medium, and the second beam splitter splitting the fourth optical path into a fourth plurality of sub optical paths, each of the fourth plurality of sub optical paths is optically coupled to the second beam splitter, wherein each of the fourth plurality of sub optical paths comprises the corresponding second active polarizing filter, the corresponding second auto-focus lens, and the corresponding second sensor, and each of the fourth plurality of sub optical paths focuses on one of the one or more groups of one or more objects within the visual scene.

14. The method of claim 13, further comprising:
capturing each of the first set of focused images synchronously with each of the corresponding second set of focused images when each of the one or more groups of one or more objects is detected by the first camera assembly and the second camera assembly to be in focus respectively, and when the first optical path, the first plurality of sub optical paths, the second optical path, and the second plurality of sub optical paths are open; and
capturing each of the third set of focused images is captured synchronously with each of the corresponding fourth set of focused images when each of the one or more groups of one or more objects is detected by the first camera assembly and the second camera assembly to be in focus respectively, and when the third optical path, the third plurality of sub optical paths, the fourth optical path, and the fourth plurality of sub optical paths are open.

15. The method of claim 13 or 14, further comprising:
during the first image capture cycle:
capturing, by each of the plurality of the first sensors, a focused image of the first set of focused images when a group of one or more objects is detected to be in focus;
capturing, by each of the plurality of the second sensors, a focused image of the second set of focused images when a corresponding group of one or more objects is detected to be in focus;
recording related data of the focused image of the first set of focused images and the focused image of the second set of focused images;
transmitting the focused image of the first set of focused images captured and the focused image of the second set of focused images captured and their related data to the stereoscopic dynamic imaging system; and
during the second image capture cycle:
capturing, by each of the plurality of the first sensors, a focused image of the third set of focused images when a group of one or more objects is detected to be in focus;
capturing, by each of the plurality of the second sensors, a focused image of the fourth set of focused images when a corresponding group of one or more objects is detected to be in focus;
recording related data of the focused image of the third set of focused images and the focused image of the fourth set of focused images; and
transmitting the focused image of the third set of focused images captured and the focused image of the fourth set of focused images captured and their related data to the stereoscopic dynamic imaging system; and
repeating the operations performed during the first image capture cycle and the subsequent second image capture cycle for each of the one or more groups of one or more objects until each of the first set of focused images, the second set of focused images, the third set of focused images, and the fourth set of focused images is captured.

16. The method of claim 15, wherein the related data of the first set of focused images, the second set of focused images, the third set of focused images and the fourth set of focused images comprises:
a total number of images captured in each of the first set of focused images, the second set of focused images, the third set of focused images and the fourth set of focused images;
a time when each of the first set of focused images, the second set of focused images, the third set of focused images and the fourth set of focused images is captured;
one or more optical conditions when each of the first set of focused images, the second set of focused images, the third set of focused images and the fourth set of focused images is captured;
GPS location coordinates where each of the first set of focused images, the second set of focused images, the third set of focused images and the fourth set of focused images is captured;
data needed to determine focusing distances to each of the one or more groups of one or more objects within the visual scene for each of the first set of focused images, the second set of focused images, the third set of focused images and the fourth set of focused images is captured; and
data needed to determine the boundaries of each of the one or more groups of one or more objects within the visual scene for each of the first set of focused images, the second set of focused images, the third set of focused images and the fourth set of focused images is captured.

17. The method of one of claims 10 to 16, further comprising:
capturing a first focused image of the first set of focused images, a first focused image of the second set of focused images, a first focused image of the third set of focused images, and a first focused image of the fourth set of focused images, wherein each of the first focused images of the first set of focused images, the second set of focused images, the third set of focused images, and the fourth set of focused images is focused on a first group of one or more objects within a near focal depth, and the near focal depth is within a range less than about 30% of a distance between the first camera assembly and the second camera assembly to infinity of the visual scene;
capturing a second focused image of the first set of focused images, a second focused image of the second set of focused images, a second focused image of the third set of focused images, and a second focused image of the fourth set of focused images, wherein each of the second focused images of the first set of focused images, the second set of focused images, the third set of focused images, and the fourth set of focused images is focused on a second group of one or more objects within a medium focal depth, and the medium focal depth is about 30% to 60% of the distance between the first camera assembly and the second camera assembly to the infinity of the visual scene; and
capturing a third focused image of the first set of focused images, a third focused image of the second set of focused images, a third focused image of the third set of focused images, and a third focused image of the fourth set of focused images, wherein each of the third focused images of the first set of focused images, the second set of focused images, the third set of focused images, and the fourth set of focused images is focused on a third group of one or more objects within the far focal depth, wherein the far focal depth is within a range greater than 60% of the distance between the first camera assembly and the second camera assembly to the infinity of the visual scene.
